# EUROPÄISCHE PATENTSCHRIFT

(11) **EP 0 815 997 B1**
(45) Veröffentlichungstag und Bekanntmachung des Hinweises auf die Patenterteilung: **15.11.2000**
(21) Anmeldenummer: 97108453.8
(22) Anmeldetag: 26.05.1997
(51) Int. Cl.: B23B 31/117

(54) **Einrichtung zum zentrischen oder/und unwuchtfreien Haltern von Werkstücken oder Werkzeugen**
Device for centering and/or balanced clamping of workpieces or tools
Dispositif pour le centrage et/ou le maintien équilibré de pièces ou d'outils

(30) Priorität: 26.06.1996 DE 19625553
(43) Veröffentlichungstag der Anmeldung: 07.01.1998
(73) Patentinhaber: Kühl, Hans, D-73207 Plochingen (DE)
(72) Erfinder: Kühl, Hans, Dipl.-Ing., 73207 Plochingen (DE)
(74) Vertreter: Pöpel, Friedemann

(56) Entgegenhaltungen:
- EP-A- 0 532 824
- DE-A- 3 205 088
- DE-C- 907 233

## Beschreibung

Die Erfindung betrifft eine Einrichtung zum zentrischen oder/und unwuchtfreien Haltern von Werkstücken oder Werkzeugen an einer Spindel einer Werkzeugmaschine mittels zentrischer Halteflächen.

Eine derartige Einrichtung ist z.B. bekannt aus DE 907 233 C.

Bspw. in Drehmaschinen mit einer Spindel werden Werkzeuge in auswechselbaren Spannhülsen oder zu bearbeitende Werkstücke in Spannfuttern und diese wiederum in Halterungen der Spindel an zylindrischen Halte- oder Spannflächen aufgenommen, die zur Drehachse der Spindel zentrisch sind. Diese Halte- oder Spannflächen weisen auch bei hochgenauer Fertigung unvermeidliche Exzentrizität zu ihrer Achse auf. Beim Aufnehmen eines Werkzeuges in einer Spannhülse oder eines Werkstückes in einem Spannfutter und der Spannhülse oder des Spannfutters in der Spindel addieren sich diese Exzentrizitäten je nach zufälliger Winkelstellung der Teile zueinander verstärkend oder vermindernd.

In andern Fällen weisen die genannten Teile auch Unwuchten auf, die sich beim Aufnehmen in der Spindel ebenso verstärkend oder vermindernd addieren und insbesondere bei hohen Drehzahlen zu Schwingungen oder zu Bearbeitungsfehlern führen.

Der Erfindung war die Aufgabe gestellt, eine einfache Möglichkeit anzugeben, ein Werkzeug in einer Spannhülse, ein Werkstück in einem Spannfutter und eine Spannhülse oder ein Spannfutter in einer Spindel einer Drehmaschine rasch einsetzen und entnehmen zu können und sicher zentrisch oder/und unwuchtfrei zu haltern.

Sie löst diese Aufgabe durch die im Anspruche 1 genannten Merkmale und durch das Verfahren gemäß Anspruch 6. Infolge des Fügespaltes und der um den Umfang der Halteflächen angeordneten Keile kann das Werkzeug in der Spannhülse, das Werkstück im Spannfutter und diese wiederum in der Spindel eingesetzt und durch Drehen um den Bruchteil einer Umdrehung durch Reibschluß befestigt werden.

Insbesondere dann, wenn drei Keile um gleiche Winkel zueinander versetzt angeordnet sind, ist eine sehr gute Zentrierwirkung gegeben.

Insbesondere dann, wenn die Anzahl der Keile auf bspw. sechs erhöht wird, ergibt sich der Vorteil, daß die Teile in der Anzahl der Keile entsprechenden winkelversetzten Ausgangsstellungen in die jeweils zugeordnete Halterung eingesetzt und durch Verdrehen reibschlüssig mit dieser verbunden werden. Bei flacher Steigung ist ein Verdrehen im Reibschluß um bis zu 30° möglich. Bei bspw. sechs Keilen auf dem Umfang ergeben sich sechs, sich jeweils über bis zu 30° erstrekkende unterschiedliche Stellungen zum Befestigen. Wenn die Winkelstellungen der Exzentrizitäten oder Unwuchten zweier jeweils zu verbindender Teile in Bezug auf eine jeweilige Ausgangsstellung bekannt sind, können die Teile in einer solchen gegenseitigen Winkelstellung gefügt und in den Reibschluß gedreht werden, daß sich die Exzentrizitäten oder die Unwuchten in Bezug auf die Drehachse der Spindel weitgehend diametral gegenüberstehen. Dadurch wird erreicht, daß sich die Exzentrizitäten oder die Unwuchten so weit wie möglich gegenseitig bis auf einen verbleibenden Rest ausgleichen.

Die Mindestzahl der Keile um den Umfang der Halteflächen ist zwei - sie gewährt sicheres Halten und bietet insbesondere dann, wenn die Oberflächen der Keile erfindungsgemäß dem Verlauf einer logarithmischen Spirale folgenden und damit in allen Winkelstellungen zueinander flächig aneinander liegen, hohe Zentriergenaugigkeit in der jeweiligen Halterung.

Je flacher die Steigung der Keile in den Profilpaarungen ist, um so größer ist der Winkel, um den die Teile im Reibschluß in eine Stellung optimalen Ausgleiches der Exzentrizitäten oder der Unwuchten verdreht werden können.

Die Breite der Keile ist so gewählt, daß das erforderliche Moment bei der Arbeit des Werkzeuges bzw. beim Bearbeiten des Werkstükkes aufgenommen bzw. übertragen werden kann. Die Steigungsrichtung der Keile ist vorteilhafterweise so, daß der Reibschluß beim Bearbeiten tendenziell erhöht wird.

Die keilförmigen Profile haben darüber hinaus den Vorteil, daß sie insbesondere beim Haltern eines Werkzeuges auch als Überlastschutz wirken. Wenn nämlich die Steigung der Keile oder/und die Länge der Keile in Umfangsrichtung gering ist, können die Keile bei extremem Ansteigen des Widerstandsmomentes überspringen, d.h. die höchsten Erhebungen der Keile einer Profilpaarung gleiten Übereinander hinweg. Dadurch wird der Anstieg des anliegenden Momentes begrenzt und Bruch vermieden.

Bevorzugt ist dabei vorgesehen, durch entsprechende Wahl der Steigungen ein Überspringen von Profilpaarungen zwischen ein Werkzeug und die Spannhülse zu verlagern, um ein Beschädigen der Halterung an der Spindel zu vermeiden.

Eine vorteilhafte Steigung der Keile hängt u.a. vom Durchmesser der Profilierung ab. Bei geringen Durchmessern sind die Steigungen höher und liegen im Bereich von 1:50 bis 1:200. Bei großen Durchmessern können sie bis auf 1:500 zurückgehen.

In den Figuren der Zeichnung sind Ausführungsbeispiele der Erfindung an einer Drehmaschine und in Form eines Spannfutters; einer Spannhülse und eines Werkzeuges schematisch dargestellt. Es versteht sich, daß die Erfindung auch an vielen anderen Einrichtungen einsetzbar ist. Es zeigen
- Fig. 1: die Aufnahme eines Spannfutters gemäß der Erfindung im Längsschnitt;
- Fig. 2: den Querschnitt durch den Gegenstand der Fig. 1 in der Ebene A-A dieser Figur;
- Fig. 3: das Prinzip des erfindungsgemäßen Ausgleichens von Exzentrizitäten oder Unwuchten;
- Fig. 4: die Aufnahme eines Werkzeuges im Längsschnitt;
- Fig. 5: eine andere Ausführungsform zur Aufnahme eines Werkzeuges ebenfalls im Längsschnitt.

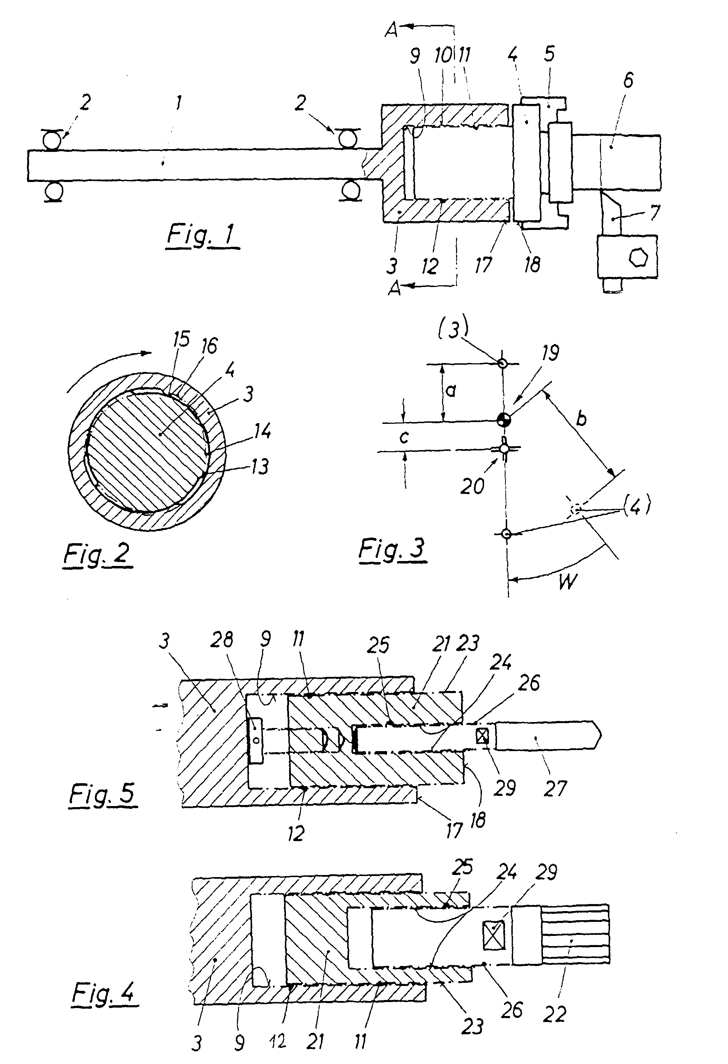

Wie aus Fig. 1 erkennbar, ist die Spindel 1 bspw. einer Drehmaschine in zwei Wälzlagern 2 gelagert - ihr geläufiger Antrieb ist der Übersichtlichkeit halber nicht dargestellt. Am freien Ende trägt die Spindel 1 eine topfförmige Halterung 3 zum Aufnehmen eines Spannfutters 4. Das Spannfutter 4 ist von geläufiger und daher hier nicht näher beschriebener Bauart und spannt mittels seiner Backen 5 ein Werkstück 6. Das als Beispiel gewählte Werkstück 6 weist zylindrische Form auf und sei bspw. mittels eines Drehstahles 7 auf seinem Umfang zu überdrehen.

Die zylindrische Haltefläche 9 der Halterung 3 und die ebenfalls zylindrische Haltefläche 10 des Spannfutters 4 sind mit Profilen 11 bzw. 12 versehen, deren Ausführung aus Fig. 2 ersichtlich ist. Das Profil 11 auf dem Spannfutter 4 wird von Keilen 13 gebildet, die über eine gedachte, strichpunktierte, zylindrische Bezugsfläche 14 mit einer geringen, hier der Deutlichkeit stark überhöht dargestellten Steigung von bspw. 1:100 ansteigen und in steiler Böschung wieder auf diese Bezugsfläche abfallen. Entsprechend überragen die das Profil 12 auf der Haltefläche 9 der Halterung 3 bildenden Keile 15 eine gedachte zylindrische Bezugsfläche 16 mit etwas größerem Durchmesser als demjenigen der Bezugsfläche 14 nach innen. Im dargestellten Beispiel sind drei sich über jeweils 120° erstreckende Keile 13, 15 gezeichnet. Die Keile 13, 15 bzw. deren Oberflächen bilden demnach aufeinander abgestimmte Profile 11 bzw. 12 in der Halterung 3 bzw. auf dem Spannfutter 4. Außer in der stark überhöhten Darstellung der Fig. 2 sind die Profile in den anderen Figuren nur strichpunktiert angedeutet, da die Höhe der Keile so gering ist, daß sie nicht erkennbar wären.

Zwischen den Oberflächen der Keile 13, 15 besteht in einer Ausgangsstellung, in der die steilen Böschungen der Keile aneinander liegen, ein als Fügespiel dienender Spalt, der das Einführen des Spannfutters 4 in die Halterung 3 erlaubt.

Eine einmal ermittelte Winkellage einer Exzentrizität oder einer Unwucht der Halterung 3 der Spindel 1 ist bspw. an der Kante der Halterung mit einer Markierung 17 angegeben. Ebenso ist die Winkellage einer jeweils zu ermittelnden Unwucht oder einer Exzentrizität des Spannfutters 4 auf diesem mit einer Markierung 18 festgehalten.

Um das Spannfutter 4 in die Halterung 3 einzusetzen, wird es unter Ausnutzung des Fügespaltes und unter Beachtung der Markierungen 17 und 18 so in die Halterung 3 eingeschoben und in der Darstellung der Fig. 2 entgegen dem Uhrzeiger verdreht, bis die Markierung 18 auf dem Spannfutter beim Verdrehen desselben in den Reibschluß mit der Halterung 3 der Markierung 17 auf der Aufnahme 3 - je nach Anordnung der Markierungen direkt oder in Bezug auf die Drehachse 19 der Spindel 1 - annähernd gegenübersteht. Dabei legen sich die Oberflächen der Keile 13 auf dem Spannfutter 4 und der Keile 15 in der Halterung 3 aneinander an und gleiten unter zunehmender Flächenpressung aufeinander in Reibschluß. Der Steigungssinn der Keile 13, 15 ist dabei so, daß dieser Reibschluß beim Drehen der Werkstückspindel 1 in der in Fig. 2 mit einem Pfeil angegebenen Arbeits-Drehrichtung verstärkt wird.

Zum Entnehmen des Spannfutters 4 aus der Halterung 3 der Spindel 1 werden Spannfutter und Spindel in umgekehrter Richtung wie beim Einsetzen gedreht, wodurch der Reibschluß gelöst wird und das Spannfutter entnommen werden kann. Das Spannfutter 4 kann zum Verdrehen in den und aus dem Reibschluß mit einer nicht eingezeichneten Schlüsselfläche versehen sein, an der ein geeignetes Werkzeug angreifen kann.

In Fig. 3 ist das Prinzip des angestrebten Ausgleiches von Exzentrizitäten oder Unwuchten dargestellt:
Es sei angenommen, die Halterung 3 habe eine Exzentrizität a oder eine Unwucht mit dem Moment (Größe mal Abstand von der Drehachse 19 der Spindel) von a in der angegebenen Richtung. Das Spannfutter 4 habe eine Exzentrizität b oder eine Unwucht mit dem Moment b. Das Spannfutter 4 wird so in die Halterung 3 eingesetzt und um den Winkel W in Reibschluß gedreht, daß die Richtung seiner Exzentrizität oder Unwucht derjenigen der Halterung in Bezug auf die Drehachse 19 möglichst genau gegenübersteht. Dadurch gleichen sich die Exzentrizitäten oder Unwuchten a und b bis auf den Restbetrag c einer resultierenden Exzentrizität oder Unwucht 20 aus.

In Fig. 2 sind der besseren Erkennbarkeit halber Profile 11, 12 mit nur drei Keilen 13 bzw. 15 dargestellt. Um einen genaueren Ausgleich von Exzentrizitäten oder Unwuchten zu ermöglichen, sind die Profile 11, 12 vorteilhaft mit mehr als drei, vorzugsweise mit sechs Keilen ausgestattet, die ein Einsetzen des Spannfutters in um je 60° verschwenkten Stellungen ermöglichen.

Das Spannfutter 4 wird mit "Vorlauf" in dem Sinne eingesetzt, daß sich seine Markierung 18 beim Drehen entgegen dem Uhrzeigersinn in Richtung auf die Markierung 17 auf der Aufnahme 3 bewegen kann. Hierbei wird zunächst den Fügespalt aufgehoben und dann Reibschluß mit so hoher Flächenpressung erreicht, daß das Bearbeitungsmoment aufgenommen werden kann. In diesem Reibschluß kann das Spannfutter 4 dann noch weitergedreht werden, bis sich die Markierungen 17, 18 annähernd gegenüberstehen. Für dieses Verdrehen steht in aller Regel ein Drehwinkel von bis zu 30° zur Verfügung, so daß die Markierungen 17, 18 und damit die auszugleichenden Exzentrizitäten oder Unwuchten sich bis auf eine Winkelabweichung von ± 15° gegenüberstehend eingestellt werden können.

In gleicher Weise wie für das vorstehend beschriebene Spannfutter 4 kann gemäß Fig. 4 auch eine Spannhülse 21 zum Haltern eines Werkzeuges wie bspw. eines Fräsers 22 in die Halterung 3 der Spindel 1 eingesetzt werden. Die Spannhülse 21 weist hierzu auf ihrer im wesentlichen zylindrischen Haltefläche 23 das an das Profil 12 der Halterung 3 angepaßte Profil 11 auf.

Erfindungsgemäß weist die Spannhülse 21 auch in ihrer zentrischen Aufnahme 24 für das Werkzeug 22 ein Profil 25 der beschriebenen Art zum Haltern des mit einem angepaßten Profil 26 versehenen Werkzeuges 22 auf. Diese Profile 25/26 erleichtern und beschleunigen nicht nur das Austauschen von Werkzeugen in der Spannhülse und sichern eine weitestgehend zentrische Aufnahme derselben sowohl in der Spannhülse 21 als auch in der Aufnahme 3 der Spindel 1, mittels dieser Profile können - wie vorstehend für die Paarung Spannfutter/Halterung der Spindel beschrieben - auch Exzentrizitäten oder Unwuchten zwischen Spannhülse und Werkzeug vermindert werden.

Einsetzen und Entnehmen der Spannhülse 21 in die bzw. aus der Halterung 3 der Spindel und des Werkzeuges 22 in die bzw. aus der Spannhülse erfolgt wie dies für das Spannfutter 4 beschrieben worden ist. In gleicher Weise kann ein Werkzeug 22 bei Verschleiß oder Beschädigung aus der Spannhülse 21 entnommen und durch ein anderes Werkzeug ersetzt werden. Die Werkzeuge 22 sind vorteilhafterweise mit Schlüsselflächen 29 versehen, an denen Werkzeuge zum Auswechseln angreifen können.

Im Ausführungsbeispiel der Fig. 5 ist das Werkzeug ein Bohrer 27, der beim Bearbeiten nicht nur Drehmoment zu übertragen hat, sondern auch Schubkraft in Bohrrichtung. Damit er diese Schubkraft sicher auf die Spannhülse 21 übertragen kann, ist die Aufnahmebohrung 24 der Spannhülse als Sackbohrung ausgeführt, an deren Grund der Bohrer mit dem Ende seines Schaftes anliegt. Auch die Spannhülse 21 stützt sich mittels einer Stellschraube 28 an der Rückwand der Bohrung der Halterung 3 der Spindel 1 ab. Mittels dieser Stellschraube 28 kann die Bohrtiefe des Bohrers 27 eingestellt werden. Diese Einstellung kann natürlich auch durch Einlegen von Distanzstücken zwischen Stirnfläche der Spannhülse 21 und dem Boden der Bohrung der Halterung 3 erreicht werden.

Insbesondere beim Haltern von Werkzeugen wie Fräsern 22 gemäß Fig. 4, die beim Bearbeiten keine wesentlichen Schubkräfte zu übertragen haben, genügt in der Regel die durch den Reibschluß in den Profilpaarungen 11/12 und 25/26 aufgebrachte Haltekraft. Besondere Vorkehrungen hinsichtlich der Sicherung gegen achsiales Verschieben sind jedenfalls hier entbehrlich. Der Reibschluß kann jedoch auch in den meisten anderen Fällen so hoch gewählt werden, daß allein über die Profilpaarungen 11/12 und 25/26 auch ausreichende Schub- und Zugkräfte übertragen werden können.

So wird in der Ausführungsform der Fig. 4 zum Justieren der Stellung des Werkzeuges 22 in Achsrichtung die Spannhülse 21 entsprechend tief in die Halterung 3 der Spindel 1 eingeschoben und durch gegeneinander Verdrehen von Spannhülse und Halterung befestigt. Die Profilflächen sind in Achsrichtung vorteilhaft so breit, daß auch bei geringster vorgesehener Einschubtiefe ausreichend hoher Reibschluß erreicht wird, um die erforderlichen Momente und Kräfte zu übertragen.

In manchen Fällen kann es vorteilhaft sein, die Keile steil schraubenförmig verlaufen zu lassen. Hierdurch kann erreicht werden, daß eine Resultierende aus einer Umfangskraft und aus einer Schubkraft in Achsrichtung annähernd in der Steigungsrichtung der Keilflächen wirkt.

Der Steigungssinn der Keile 13 bzw. 15 ist in beiden Profilpaarungen 11/12 und 25/26 vorteilhaft so gewählt, daß das Festziehen der Profilpaarungen in derjenigen Drehrichtung erfolgt, in der beim Arbeitseinsatz Moment übertragen wird. Der Reibschluß kann jedoch ohne weiteres so hoch gewählt werden, daß auch in der entgegengesetzten Drehrichtung ein das aufzubringende Arbeitsmoment übersteigendes Haltemoment vorhanden ist, ein Werkzeug also in beiden Drehrichtungen einsetzbar ist.

Die Höhe des Reibschlusses kann durch die Steigung der Keile 13 und 15, durch deren Breite, durch die Materialpaarung der zusammenwirkenden Profile und durch das Anzugsmoment bestimmt werden. Die Steigung der Keile 13, 15 liegt vorteilhaft zwischen 1:50 und 1:500. Dabei sind größere Steigungen kleineren Durchmessern wie etwa dem des Bohrers 27, kleinere Steigungen dagegen größeren Durchmessern zugeordnet. Durch die bevorzugte gleichabstandige Anordnung dreier Keile 13, 15 über den Umfang wird eine vorteilhafte Zentrierwirkung erzielt, wie schon erwähnt, sind jedoch auch andere Anzahlen von Keilen um den Umfang möglich.

Die keilförmigen Profile 11, 12 bzw. 25, 26 in der Halterung 3 und auf dem Spannfutter 4 bzw. der Spannhülse 21 und auf einem Werkzeug 22, 27 können bspw. durch Schleifen hergestellt werden. Die Oberflächen der Keile 13, 15 können zylindrisch sein.

Vorteilhafterweise folgen sie jedoch einer logarithmischen Spirale, da in diesem Falle die ganzen Flächen mit gleicher Flächenpressung aneinander anliegen und dadurch optimaler Reibschluß und optimale Zentrierung auch unter einseitiger Belastung gegeben ist.

Es versteht sich, daß das Haltern des Spannfutters 4 oder der Spannhülse 21 auch in kinematischer Umkehr der dargestellten Ausführung möglich ist, indem die Halterung 3 das Profil 12 auf ihrem Außenumfang trägt und das Spannfutter 4 bzw. die Spannhülse 21 das Profil 11 in einer Bohrung.

### Bezugszahlenliste

- 1: Spindel
- 2: Wälzlager
- 3: Halterung
- 4: Spannfutter
- 5: Backen
- 6: Werkstück
- 7: Drehstahl
- 9: Haltefläche der Halterung
- 10: Haltefläche des Spannfutters
- 11: Profil auf dem Spannfutter
- 12: Profil in der Halterung
- 13: Keil auf dem Spannfutter
- 14: zylindrische Bezugsfläche
- 15: Keil in der Halterung
- 16: zylindrische Bezugsfläche
- 17, 18: Markierungen
- 19: Drehachse
- 20: Restunwucht
- 21: Spannhülse
- 22: Fräser
- 23: Haltefläche der Spannhülse
- 24: zentrische Aufnahme
- 25, 26: Profile
- 27: Bohrer
- 28: Stellschraube
- 29: Schlüsselfläche

## Patentansprüche

1. Einrichtung zum zentrischen oder/und unwuchtfreien Haltern drehender Teile wie eines Spannfutters (4) für ein Werkstück (6) oder einer Spannhülse (21) fur ein Werkzeug (27) oder eines Werkzeuges (22) an einer spindel (1) einer Drehmaschine mittels zentrischer Halteflächen (9,10,23), dadurch gekennzeichnet, daß die Halteflächen (9, 10, 23) mit paarweise aufeinander abgestimmten Profilen (11, 12; 25, 26) versehen sind, die jeweils mindestens zwei, gedachte zylindrische Bezugsflächen (14, 16) radial nach außen bzw. nach innen übersteigende und jeweils wieder steil auf die Bezugsflächen abfallende, um gleiche Winkel in Umfangsrichtung versetzte Keile (13, 15) aufweisen, die in einer Fügestellung einen Fügespalt aufweisen und die durch Drehen der Teile unter zunehmender Flächenpressung aufeinander in Reibschluß gleiten.

2. Halterung nach Anspruch 1, dadurch gekennzeichnet, daß die Steigung der Keile (13, 15) zwischen 1:50 und 1:500 liegt.

3. Halterung nach einem der vorhergehenden Ansprüche, dadurch gekennzeichnet, daß die Anzahl der Keile (13, 15) einer Profilpaarung (11/12, 25/26) drei beträgt.

4. Halterung nach einem der Ansprüche 1 oder 2, dadurch gekennzeichnet, daß die Anzahl der Keile (13, 15) einer Profilpaarung (11/12, 25/26) sechs beträgt.

5. Halterung nach einem der vorhergehenden Ansprüche, dadurch gekennzeichnet, daß der Steigungssinn der Keile (13, 15) der Profilpaarungen (11/12, 25/26) so ist, daß sie beim Bearbeiten eines Werkstückes aneinander aufzugleiten bestrebt sind.

6. Verfahren zum Ausgleichen von Exzentrizitäten und/oder Unwuchten einer Spindel (1) einer Drehmaschine und eines Spannfutters (4), einer Spannhülse (21), eines Werkstückes (6) oder eines Werkzeuges (22,27), die an der Spindel (1) aufgenommen sind mittels einer Einrichtung nach einem der vorhergehenden Ansprüche, wobei die Exzentrizität und/oder die Unwucht der drehenden Teile ermittelt werden und die Teile in einer solchen gegenseitigen Winkelstellung gefügt werden, daß sie unter Erreichen ausreichenden Reibschlusses in eine Winkelstellung gedreht werden können, in der sich die ermittelten Exzentrizitäten und/oder Unwuchten in Bezug auf die Drehachse der Spindel (1) annähernd diametral gegenüberstehen.

## Claims

1. Device for holding rotating parts, such as a chuck (4), for a workpiece, or a clamping sleeve (21), for an instrument (27) or tool (22), on a shaft or spindle (1) of a lathe or other turning machine, centrally and/or free of imbalance, by means of central holding surfaces (9, 10, 23), characterized in that the holding surfaces (9, 10, 23) are provided with paired, matched cross-sectional forms (11, 12; 25, 26) each having at least two shims 13, 15), separated, peripherally, by the same angle, crossing imaginary cylindrical reference surfaces (14, 16) radially outwards or inwards and, in each case, again sloping off steeply to the reference surfaces, these shims, in a joined setting, showing a gap and, through the turning of the parts, sliding into frictional contact with each other, under increasing surface pressure.

2. Holding means in accordance with claim 1, characterized in that the gradient of the shims (13, 15) is between 1:50 and 1:500.

3. Holding means in accordance with one of the preceding claims, characterized in that there are three shims (13, 15) for a cross-sectional form pair (11/12, 25/26).

4. Holding means in accordance with one of claims 1 and 2, characterized in that there are six shims (13, 15) per pair of cross-sectional forms (11/12, 25/26).

5. Holding means in accordance with any one of the foregoing claims, characterized in that the reverse gradient of the shims (13, 15) of the pairs of cross-sectional forms (11/12, 25/26) is such as to lead to the sliding of these, one onto another, during the machining of a workpiece.

6. Process for balancing eccentricities and/or imbalances in a shaft or spindle (1) of a lathe or other turning machine and a chuck (4), a clamping sleeve (21), a workpiece, or a tool (22, 27) which is taken up, by means of a device in accordance with any one of the foregoing claims, on the shaft or spindle (1), whereby the eccentricity and/or the imbalance of the rotating parts can be determined, and the parts can be joined in such a counter angular position that, with sufficient frictional locking, they can be turned in an angular position in which the recorded eccentricities and/or imbalances, in relation to the axis of rotation of the shaft (1), are approximately diametrically opposed to each other.

## Revendications

1. Dispositif pour le centrage et/ou le maintien équilibré de pièces rotatives telles qu'un mandrin de serrage (4) pour une pièce (6) ou un manchon de serrage (21) pour un outil (27) ou un outil (22) sur une broche (1) d'un tour, à l'aide de surfaces de maintien (9, 10, 23) centrées, caractérisé en ce que les surfaces de maintien (9, 10, 23) sont munies de profilés (11, 12 ; 25, 26) qui sont adaptés l'un à l'autre par paire et présentent respectivement au moins deux surfaces de référence (14, 16) cylindriques supposées, dépassant radialement vers l'extérieur ou vers l'intérieur et des clavettes (13, 15) qui décroissent respectivement de nouveau abruptement sur les surfaces de référence, sont décalées du même angle dans le sens périphérique, présentent dans une position d'assemblage une fente de jointure et qui glissent par frottement l'une sur l'autre par la rotation des pièces sous l'effet de la pression spécifique croissante de surface.

2. Maintien selon la revendication 1, caractérisé en ce que le rapport d'inclinaison des clavettes (13, 15) se situe entre 1:50 et 1:500.

3. Maintien selon l'une des revendications précédentes, caractérisé en ce que le nombre de clavettes (13, 15) d'une paire de profilés (11/12; 25/26) est de trois.

4. Maintien selon la revendication 1 ou 2, caractérisé en ce que le nombre de clavettes (13, 15) d'une paire de profilés (11/12; 25/26) est de six.

5. Maintien selon l'une des revendications précédentes, caractérisé en ce que le sens d'inclinaison des clavettes (13, 15) des paires de profilés (11/12, 25/26) est tel que, lors du traitement d'une pièce à usiner, elles s'efforcent de glisser l'une contre l'autre.

6. Procédé pour équilibrer les excentricités et/ou déséquilibres d'une broche (1) d'un tour et d'un mandrin de serrage (4), d'un manchon de serrage (21), d'une pièce (6) ou d'un outil (22, 27) qui sont logés sur la broche (1), à l'aide d'un dispositif selon l'une quelconque des revendications précédentes, caractérisé en ce que l'excentricité et/ou le déséquilibre des pièces rotatives sont déterminés et en ce que les pièces sont assemblées dans une position angulaire réciproque de telle sorte que, sous l'effet d'un frottement suffisant, elles peuvent être tournées dans une position angulaire dans laquelle les excentricités et/ou déséquilibres déterminés s'opposent presque diamétralement en référence à l'axe de rotation de la broche (1).
